# EUROPEAN PATENT APPLICATION

(11) **EP 4 187 109 A1**
(43) Date of publication of application: **31.05.2023**
(21) Application number: 21211202.3
(22) Date of filing: 30.11.2021
(51) Int. Cl.: F16B 5/00

(54) **BONE SHAPED PANEL CONNECTOR**

(71) Applicant: Hilti Aktiengesellschaft, 9494 Schaan (LI)
(72) Inventor: Schneider, Roland, 6824 Schlins (AT); Reumschuessel, Lukas, 82256 Fürstenfeldbruck (DE); Alizadeh, Michaela, 7304 Maienfeld (CH); Sanchez Lopez, Marco, 9000 St Gallen (CH)
(74) Representative: Hilti Aktiengesellschaft Corporate Intellectual Property

(57) **Abstract**

Panel connector comprising a first knob, a second knob and a bridge connecting the first knob and the second knob, characterized in that the first knob tapers along an insertion direction of the connector, and the second knob tapers along the insertion direction of the connector.

## Description

The invention relates to panel connectors.

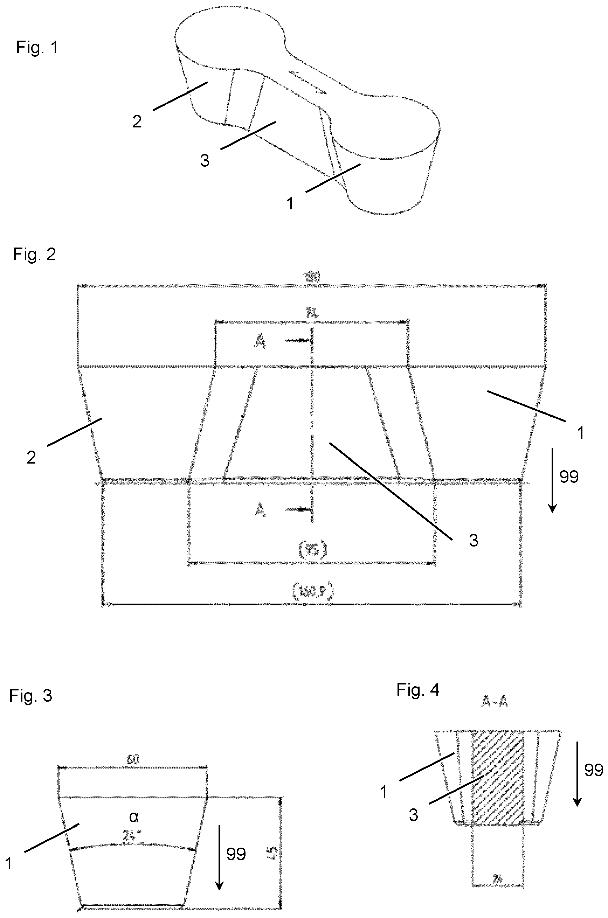

Figure 1 is a perspective view of a first embodiment of a connector.
Figure 2 is a side view of the connector of figure 1,
Figure 3 is a front view of the connector of figure 1, facing the first knob.
Figure 4 is a sectional view of the connector of figure 1, with the sectional plane A-A in figure 2 extending along the insertion direction and cutting through the bridge, facing the first knob.
Figure 5 is a perspective view of a panel intended to be connected by the connector of figure 1.
Figure 6 is a top view detail of the panel of figure 5.
Figure 7 is sectional view of the panel of figure 5, according to A-A in figure 6.

A panel connector according to a first embodiment comprises a first knob 1, a second knob 2 and a bridge 3 that connects the first knob 1 and the second knob 2 to one another. The knobs 1 and 2 form a keying section each, intended to provide geometrical lock.

The width of the bridge 3 (24 mm in the present case, by way of example) is smaller than the width of the first knob 1 and the width of the second knob 2 (both 60 mm in the present case, by way of example). Width is measured perpendicularly to an insertion direction 99.

Height (measured parallel to the insertion direction 99), of the first knob 1, of the second knob 2 and of the bridge 3 is the same in the present embodiment (45 mm, by way of example). However, the respective heights might also be different.

The connector is intended to be accommodated in corresponding recesses 6 of adjacent panels 5, so as to provide a geometrical lock situation between the connector and the adjacent panels 5, that can preferably transfer loads in different directions (e.g. tensile direction, i.e. perpendicular to joint orientation, or shear direction, i.e. parallel to joint orientation).

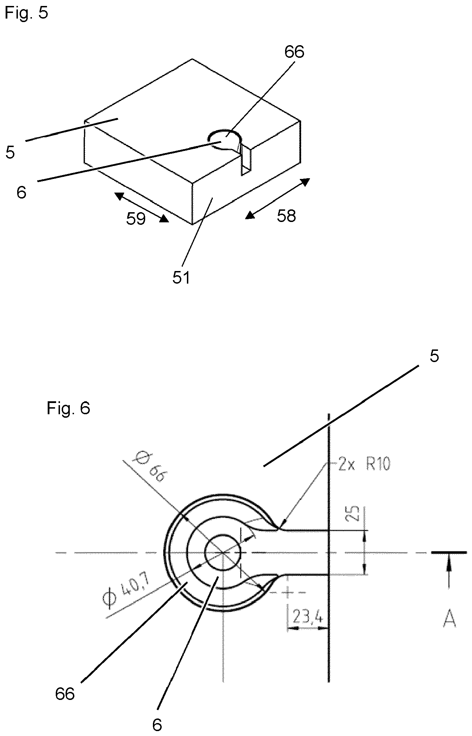

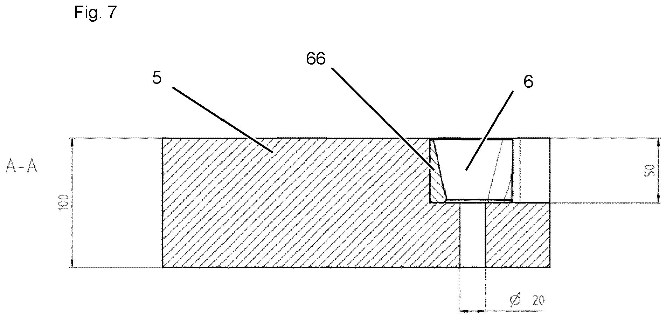

Figures 5 to 7 show an example of a panel that might be connected by means of the connector. In this context, butt-joint face 51, parallel direction 58 (i.e. parallel with respect to butt-joint face 51) and perpendicular direction 59 (i.e. perpendicular with respect to butt-joint face 51) are emphasized in figure 5.

In particular, when intended to be connected with the connector, the panels 5 are arranged in butt-joint configuration in a same plane, wherein the respective butt-joint faces 51 are oriented parallel with each other. However, a corner joint configuration might be feasible as well.

In particular, the connector can be oriented perpendicular to main direction of the butt-joint face 51, i.e. it can be orientated in perpendicular direction 59.

The first knob 1 tapers along the insertion direction 99 of the connector, and the second knob 2 tapers along the insertion direction 99 of the connector.

In particular, the flanks of the knobs 1, 2 are inclined in order to provide a wedge-effect with the walls of the recesses 6 in the panels 5, so that the panels 5 are drawn together when the connector is inserted. Both knobs 1 and 2 taper in the same direction, namely in the insertion direction 99, which is the direction the connector is intended to be inserted into the panels 5. Accordingly, each of the knobs 1 and 2 becomes progressively smaller toward that respective knob end which is leading in the insertion direction 99, i.e. that end that is intended to be inserted first into the panels 5.

In the shown first embodiment, the first knob 1 tapers conically along the insertion direction 99 of the connector, and the second knob 2 tapers conically along the insertion direction 99 of the connector. The recesses 6 have a correspondingly tapering outline.

In the shown embodiment, the knobs 1 and 2 have an opening angle α of 24°. This is, however, an example only, and preferably, opening angles α in a range of 5-40° can be envisaged.

The first knob 1, the second knob 2 and the bridge 3 are preferably monolithic, i.e. they consist of one piece. However, the connector can also consist of a plurality of separate pieces that are joined together. Preferably the connector is made of wood material, including, but not exclusive, veneer plywood made of birch or beech, CLT (cross laminated timber), GLULAM (glued laminated timber), hard or soft solid timber, molded and/or compressed parts (comprising wooden flakes or chips and organic binder such as glue). The connector can also be made of metal, ceramics, mineral material (e.g. concrete), plastic or elastomer.

The panels 5 can be made of different wood types, including CLT (cross laminated timber), GLULAM (glued laminated timber), hard or soft solid timber, hybrid wood elements (wood in combination with concrete overlay).

In the shown first embodiment, the flanks of the bridge 3 are parallel. Alternatively, they can also taper in the insertion direction 99, so as to form a wedge. In this case, the bridge 3 tapers along the insertion direction 99 of the connector. This can provide further panel alignment when the connector is inserted.

Once installed, the connector might self-lock in the final position, due to friction. Optionally, additional securing of the connector, e.g. by screwing, nailing or/and gluing can be envisaged.

The flank surfaces of the connector, in particular the flank surfaces of bridge 3, the first knob 1 and/or the second knob 2, can be modified to increase friction, e.g. by means of surface roughening or applying coatings (including glue or hard particles), with an aim to retain the connector inside the recesses 6 in case of tensile loads (that tend to push the connector outside of recess 6 due to wedge effect). Also, for the same reason, the walls of the recess 6 can be modified to increase friction, e.g. by means of surface roughening or applying coatings (including glue or hard particles).

In the shown first embodiment, an inlay 66 is arranged within the recess 6, in particular to increase friction. The optional inlay 66 can, for example, be made of wood, metal, plastic, elastomer, foam. The inlay can be considered an independent invention aspect, which can be implemented independently of the constitution of the connector, in particular independently of the shape of the knobs 1, 2.

Arrangement of connector and panels 5 (including recesses 6) allows easy and fast alignment of panels 5 (into final position with respect to each other). Panels 5 are initially oriented with respective butt-joint faces 51 opposite to each other with at a certain distance, e.g. 10mm, offset parallel and perpendicular to butt-joint direction. During installation, the connector is introduced into the recesses 6 and pressed into the recesses 6 (e.g. by means of hammer blows), thereby exerting a force acting perpendicular to the panel main orientation. Due to interaction of the geometry of the connector (wedge effect) and the recesses 6, the panels 5 are drawn together and aligned to each other to final position. The connection can be unclamped by pulling the connector out of the recesses 6, which allows disassembly of connection.

In order to manufacture the geometry of the recesses 6, at least two options appear feasible. According to option 1, the conical contour is directly machined into wooden panels. According to option 2, a generally cylindrical or the like contour is machined into the panel 5, and a separate inlay 66 with matching outer contour and conical internal contour is inserted therein.

The inlay 66 can e.g. be made of elastomer material. An additional pre-tensioning effect of the inlay 66 can be provided by compressing it during installation.

## Claims

1. Panel connector comprising
a first knob (1), a second knob (2) and a bridge (3) that connects the first knob (1) and the second knob (2) to one another,
**characterized in that**
- the first knob (1) tapers along an insertion direction (99) of the connector, and
- the second knob (2) tapers along the insertion direction (99) of the connector.

2. Connector according to claim 1,
**characterized in that**
the first knob (1) tapers conically along the insertion direction (99) of the connector, and the second knob (2) tapers conically along the insertion direction (99) of the connector.

3. Connector according to any of the preceding claims,
**characterized in that**
the first knob (1), the second knob (2) and the bridge are monolithic.

4. Connector according to any of the preceding claims,
**characterized in that**
the connector is made of a wood material.

5. Connector according to any of the preceding claims,
**characterized in that**
the bridge (3) tapers along the insertion direction (99) of the connector.

6. Panel (5), in particular wood panel, having a recess (6) for receiving a connector according to any of the preceding claims,
**characterized in that**
an inlay (66) is arranged within the recess (6).
